# EUROPEAN PATENT SPECIFICATION

(11) **EP 3 458 769 B1**
(45) Date of publication and mention of the grant of the patent: **08.07.2020**
(21) Application number: 17723401.0
(22) Date of filing: 15.05.2017
(51) Int. Cl.: F17C 3/10

(54) **CONTAINER FOR STORAGE, TRANSPORT AND DISTRIBUTION OF LIQUID OR LIQUEFIED GASES**
BEHÄLTER FÜR LAGERUNG, TRANSPORT UND VERTEILUNG VON FLÜSSIGEN ODER VERFLÜSSIGTEN GASEN
RÉCIPIENT DESTINÉ AU STOCKAGE, AU TRANSPORT ET À LA DISTRIBUTION DE GAS LIQUIDES OU LIQUÉFIÉS

(30) Priority: 18.05.2016 IT UA20163553
(43) Date of publication of application: 27.03.2019
(73) Proprietor: VRV S.r.l., 20122 Milano (IT)
(72) Inventor: ROSSI, Giuliano, 20876 Ornago (Monza Brianza) (IT); VILLA, Fabio Luigi, 20876 Ornago (Monza Brianza) (IT)
(74) Representative: Petruzziello, Aldo
(86) International application number: PCT/EP2017/061633
(87) International publication number: WO 2017/198629

(56) References cited:
- GB-A- 914 193
- US-A- 2 858 136
- US-A- 2 863 297
- US-A- 4 988 014

## Description

The present invention relates to a container for the storage, transport and distribution of liquid or liquefied gases at temperatures of <-120°C to absolute zero, having a special active shield which also serves as a tank for containing a second cryogenic liquid (hereinafter also referred to as "sacrificial fluid") having a boiling temperature at atmospheric pressure greater than that of the liquid or liquefied gas.

More particularly, the present invention relates to a container as defined above, specifically apt for the transport of helium and hydrogen in liquid form, wherein the active shield is a thermal shielding containing the "sacrificial fluid", thus further acting as tank for said "sacrificial fluid".

As is known, the problem of safety in the transportation and handling of very low boiling gases, such as helium (boiling point = 4°K) and hydrogen, in the liquid form is much more felt with respect to the transport of other liquefied gases such as oxygen, nitrogen and argon.

This is due to the fact that the heat required to vaporise liquid helium is much lower than that needed to vaporise other liquefied cryogenic fluids such as in fact oxygen, nitrogen and argon: since the vaporisation of large quantities of liquid helium is possible even with small supplies of thermal energy coming from the outside, it is clear that for transporting the liquid helium many more systems have to be adopted with respect to the transport of the other cryogenic fluids in order to minimise or even render null the amount of energy which reaches, from the outside, the container of liquid helium.

For the transport of liquid helium, it is normal to provide a protection shield which absorbs any incoming thermal energy in the containment tank of said liquefied helium.

According to the state of the art, the container for storage, transport and distribution of liquefied helium is generally made by means of two separate vessels arranged adjacent one to other, one containing a "sacrificial fluid" and the other containing the helium, both contained within a common shield.

Said "sacrificial fluid" is fed, from its tank, to a system of pipes which is attached, with metal continuity, on the shield (made in a material with good heat conductivity) in such a way that the "sacrificial fluid" absorbs heat during circulation in the piping, thus reducing the temperature of the shield itself by vaporisation and phase change.

Once vaporised, this sacrificial fluid is discharged into the air, transporting with it the energy it collects in its path, resulting in the protection of the liquid with lower boiling point, contained in the first vessel.

These two vessels and the common shield are then contained within a common outer casing that provides the attachment point for all the supports of the two tanks and of the relative shield equipped with pipes.

Said outer casing also has the function of allowing to create the high vacuum in the space between the shield and the two inner tanks, and further in the space between the outer casing and the shield, which is an indispensable condition for reaching such a level of thermal insulation as required by the physical characteristics of the considered cryogenic gases.

However, this type of container for storage, transport and distribution of liquid or liquefied gases has some disadvantages, in particular as concerns the construction of support structures for the vessels intended for containment of the liquefied gases.

In fact, for the proper functioning of the storage container, the different vessels must be physically separated from each other and from the shield in order to minimise the transfer of energy from one to the other: since the resulting structure of the supports is very complicated to mount, the risk of errors and therefore of malfunctions increases, which may result in a condition in which the different vessels are not completely separated from each other and from the shield, thereby penalising the shielding that the container is intended to obtain.

A further difficulty is represented by the differential thermal expansions between the various components, also during normal operating conditions: they can in fact easily reach such a level as to cause load conditions which compromise the integrity of the assembly, even in light of the fact that the supports provided result in a hyperstatic structure.

A further limit to the containers known in the art for storing, transporting and distributing liquid or liquefied gases derives from the functioning efficiency of the shield since, being covered by a pipe, it can have discontinuities and dishomogeneities in temperature, further decreasing the shielding effect and hence efficiency of the same.

In practice, the known configurations of the apparatuses apt to transport and distribute strongly cooled cryogenic gases have the following disadvantages:
- the structure of the anchors and of the supports of the various vessels inside of the shield and of said shield inside the outer common casing is intrinsically hyperstatic (two fixed points placed at the ends of the container), resulting in a container that is poorly able to withstand the type of stresses imposed by rail transport;
- given the hyperstatic nature of the above structure, it is necessary to have elastic elements for the recovery of the backlash that is created as a result of the different temperatures to which the different components of the assembly are subjected. However the elastic elements are subject to fatigue, and therefore to break.
- intrinsic fragility, given that an incorrect manoeuvre of cooling can cause stresses that exceed the stresses and strains admissible for the materials used;
- significant complexity of construction and assembly;
- prone to malfunctions due to construction and assembly errors.

US 4,988,014 describes a dewar cryogenic tank formed by an inner vessel and an outer casing, said tank providing an intermediate metal heat shield arranged around the inner vessel containing the cryogenic liquid, wherein said shield is cooled through a pipe in contact with said shield by using the same type of the cryogenic fluid, or a different fluid, contained in a reservoir placed outside the shield.

In addition, the internal vessel containing the cryogenic liquid and the shield are attached to the outer casing by means of internal supports forming a hyperstatic system.

GB 914193 describes a cryogenic tank without shielding, consisting of an outer vessel containing an intermediate vessel which in turn contains a spherical internal vessel accommodating the cryogenic liquid L to be transported (e.g. liquid oxygen): the inner vessel is at least partially immersed in a second cryogenic fluid R (e.g. liquid nitrogen) whose boiling point is lower than that of the cryogenic liquid L, so that the close contact of both fluids L, R with the wall that divides them prevents the first fluid L from evaporating since the first one transfers its energy to the second fluid R that surrounds it.

This configuration is clearly not applicable to helium as storage product due to the thermodynamic properties of the products considered. There is, in fact, no gas that can be used as coolant for liquid helium, and the same helium has thermodynamic characteristics that prevent its use as hydrogen coolant.

Moreover, said containers of the two cryogenic liquids are fixed to the outer casing by means of a system of internal supports which must necessarily take into account and absorb also the hydrostatic thrusts generated by the coolant liquid on the innermost vessel.

None of the two above documents, nor particularly the art known to the Applicant, describes or suggests a thermal shield which also is a tank for a "sacrificial fluid" whose vaporisation within the tank itself permits the shielding action.

US 2,863,297 provides a method and an apparatus for storing a volatile liquid wherein a colder radiation shield is utilized to shield the stored liquid from radiation from the environment.

The object of the present invention is to overcome the disadvantages of the prior art by providing a container for storing, transporting and distributing liquid or liquefied gases at temperatures of <-120°C to absolute zero, which is further apt for rail transport and shows an improved reduction in energy transfer from the outside to the liquefied helium to be stored/transported.

A further object is to provide a container of liquid or liquefied gases as defined above which is also easier to make and to assemble, and more effective in avoiding even small inputs of thermal energy coming from the outside, which would be very damaging to the transport of the helium or hydrogen in liquid form.

These and other objects are achieved by the container for storage, transport and distribution of liquid or liquefied gases at temperatures of <-120°C to absolute zero in accordance with the invention having the features listed in the appended independent claim 1.

Advantageous embodiments of the invention are disclosed by the dependent claims.

An object of the present invention relates to a container (also defined as "tank" hereinafter) for the containment and the transport of cryogenic liquids, in liquid or vapour phase, which comprises:
a shield comprising, preferably formed by, an annular chamber which is substantially cylindrical and closed, arranged coaxially around the cylindrical side surface of a first inner vessel containing a first cryogenic liquid intended to be transported/stored, said annular chamber being mechanically and physically separated from said inner vessel of said first cryogenic liquid,
said annular chamber being filled with a second cryogenic liquid (defined as "sacrificial fluid") having a boiling temperature, at atmospheric pressure, greater than said first cryogenic liquid,
wherein said second fluid is not in direct contact with said inner vessel of said first cryogenic liquid so that the frigories of said second cryogenic liquid are used to shield said first cryogenic fluid having a lower boiling temperature at atmospheric pressure with respect to the fluid used as a shield.

In practice, the shield constitutes both the jacket and the tank, closed at the ends of the side surface of said shield, inside which the "sacrificial fluid" is housed, improving the shielding power of the shield compared to the shields known in the art constituted, generally only by an intermediate metal shielding.

The main object of the present invention consists therefore of a solution that allows three different vessels to be arranged in a substantially concentric fashion one with the other, arranging the one containing the coldest fluid within a second intermediate vessel which therefore constitutes the outer side jacket containing the "sacrificial fluid", likewise a sleeve, without direct contact between said "sacrificial fluid" and the vessel containing the colder fluid, wherein the three concentric vessels are coaxial one in relation to the other, without close contact between them, except at the level of the supports as will be illustrated here below.

The advantage of having a thermal shielding that also acts as a tank of a "sacrificial fluid" lies in the decrease in the number of components needed to make the container and in a simpler construction and assembly of the same.

Further features of the invention will be made clearer by the following detailed description, referring to a purely exemplifying, and hence non-limitative, embodiment thereof illustrated in the accompanying drawings, in which:
Figure 1 is a side view of the container for the containment and transport of cryogenic liquids, liquid or vapour phase, in accordance with the invention;
Figure 2 is a vertical sectioned view of the container in accordance with the present invention taken along line II-II of Figure 1;
Figure 3 is a sectioned view of the container in accordance with the present invention taken along line III-III of Figure 1;
Figure 4 is an enlarged and partially interrupted view of the distal end (left end) of the container of Fig. 3 containing the cryogenic liquid to be transported/stored L;
Figure 5 is an enlarged and partially interrupted view of the proximal end (right end) of the container of Fig. 3;
Figure 6 is an enlarged view of the detail enclosed in the circle denoted by F in Fig. 5;
Figure 7 is a vertical sectioned view of the detail of Figure 6, taken along line VII-VII of Figure 5.

Referring to the above figures, the horizontal container for storage, transport and distribution of liquid or liquefied gases in accordance with the invention, denoted overall by reference numeral 100, will now be described.

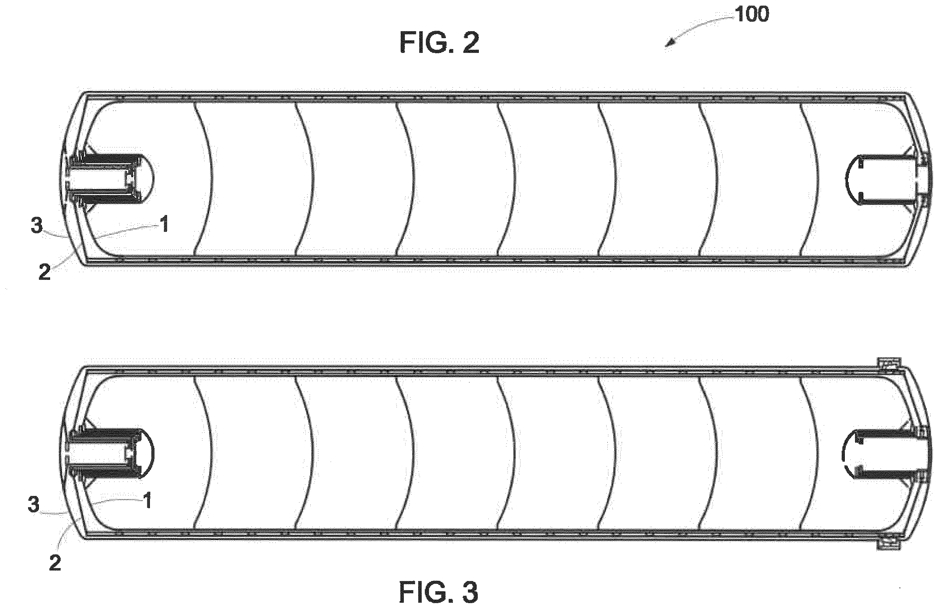

As illustrated in Figs. 2-3, said container 100 (herein after defined also as "tank") is formed by three distinct, substantially cylindrical and horizontal vessels, which are arranged one inside the other in a concentric and coaxial manner.

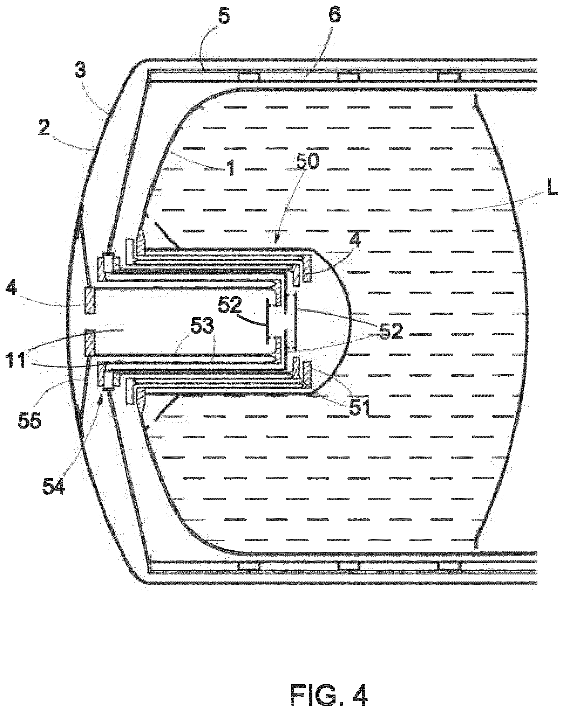

The first vessel, denoted in Figs. 4-5 by reference numeral 1, is the innermost vessel intended to contain the product L to be transported, here also referred to as first cryogenic liquid.

Said first cryogenic liquid L is generally a liquid or liquefied gas at temperatures of <-120°C to absolute zero, such as for example helium or hydrogen, preferably helium.

This vessel 1 has a substantially cylindrical shape and is suitable to be arranged horizontally, similar to the horizontal vessels known in the art.

Said vessel 1 is generally made of stainless steel or, in any case, of a material having reduced heat conductivity characteristics but suitable mechanical characteristics in the temperature range at which said vessel 1 is kept, generally in the temperature range varying between 4°K and 80°K.

Typical examples of this stainless steel are austenitic stainless steels of the series 300 (304, 316), also in variants with improved mechanical properties by means of nitrogen alloying (alligation).

This vessel 1 is, in use, immersed in the vacuum, and therefore the pressure to which it is subjected is further increased by 0.1 MPa.

The ends of this vessel 1 are not completely domed-shaped but each has a profile such as to define a respective recess 12 (Figs. 4-5) extending towards the interior of the vessel 1.

This recess 12 is apt to accommodate a respective support system which can also perform a shielding of the radiation, as will be described in detail here below.

This vessel 1 is thus designed in such a way as to withstand:
- Its own weight and that of the accessories required for assembly and use, such as internal pipes (not illustrated because normally present in conventional liquefied helium tanks), gate diaphragms (not illustrated as provided by the code for transportable liquefied helium vessels) and thermal insulation (not shown because normally present on conventional liquefied helium tanks);
- The weight of the product transported (in the case of helium generally there is a volume of about 41000 litres for a weight of 5t), as well as the hydrostatic head of the same;
- The dynamic actions generated by the movements of the liquid mass due to movements, also during transport;
- The pressure, which can reach even high values, and in any case of the order of MPa or higher.

The dimensions of said vessel 1 are such that there is no direct contact between the vessel itself, including its insulation, and any of the other remaining vessels of the container. In general, to ensure that this condition is met, it is sufficient to ensure a 20/30 mm distance from the vessel constituting the shield which is described below.

A second cylindrical vessel 2, hereinafter also referred to as an intermediate vessel, is placed externally and around said vessel 1, said second vessel 2 developing along the entire length of the inner vessel 1 and covering it without having points of contact with the shell of said vessel 1.

The term "*shell*" here is intended to identify only the lateral surface of the cylindrical vessel 1 with the exception of the ends thereof.

Said vessel 2 further comprises a cylindrical sheet 5, arranged only around the cylindrical shell of said vessel 2, which is kept appropriately spaced from said shell of the vessel 2 so as to create an annular chamber 6: a predetermined volume is defined, suitable for being filled with a second fluid, since said annular chamber 6 is closed at its ends in proximity of the ends of said vessel 2.

Said annular chamber 6 is thus intended for the containment of the "sacrificial fluid" which is used to shield the inner vessel 1 from the energy entering the inner vessel 1 as heat radiation, thereby shielding also the valuable product L contained in the inner vessel 1.

Said sacrificial fluid is generally liquid nitrogen (temperature of the liquid about 77°K), even if this is not binding for the purposes of the present invention.

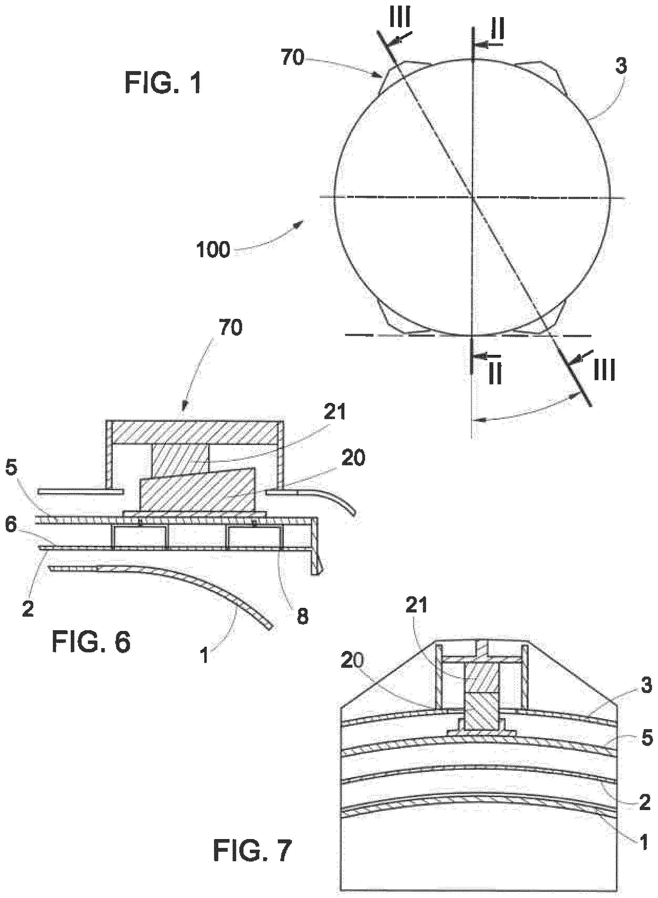

Inside said annular chamber 6 perforated spacers 8 are provided (Fig. 6), attached in a manner in itself known in the art (button welds, welds, or the like) to the cylindrical sheet 5 and to the shell of the intermediate vessel 2 so as to keep the distance between the walls defining the annular chamber 6 constant, ensuring during use the integrity of the chamber whenever there are conditions of absolute vacuum.

Said intermediate vessel 2, as well as said cylindrical sheet 5, is made of a material having high heat conductivity values, typically aluminium or copper, including their respective alloys: in this way, it is possible to perform advantageously with a single element the double function of containing the sacrificial fluid and of performing the function of shield from the heat radiation, protecting, in use, the internal vessel 1 from the heat radiations coming from the outside.

The protection is in fact effected by the sacrificial fluid contained in the annular chamber 6 of said intermediate vessel 2 which, evaporating slowly, absorbs energy which is then conveyed to the outside, by means of the vapour thus generated, using a system of control of the flow rate of said vapour (not shown), which is not the object of the present invention.

In fact this evaporated fluid, after having developed from the liquid mass contained in the annular chamber 6 of the intermediate vessel 2, is left to escape externally in a controlled and well-determined manner through one or more vents (not shown in the drawings), similarly to what already happens in the art.

Also in this case, the vessel 2 is, in use, immersed in the vacuum, and therefore the pressure to which it is subject is further increased by 0.1 MPa.

Said intermediate vessel 2 also constitutes the system of supports of the inner vessel 1 as will be explained here below in detail.

The criteria for the dimensioning of this intermediate vessel 2 are:
- The weight of the vessel and accessories required for assembly and use, such as the internal pipes for nitrogen filling (not shown because normally provided in conventional tanks), the spacers between the two walls of the vessel (spacers 8 already described previously) and thermal insulation (not shown because it is normally present on conventional liquefied gas tanks);
- The weight of the fluid intended for evaporation for the obtaining of the shielding action, as well as the hydrostatic head of the same;
- Dynamic actions generated by the movements of the liquid mass due to the handling and during transport;
- The pressure, which is however contained within the limit of some tenths of MPa;
- The weight of the inner vessel 1, of its accessories and of the product L contained therein, also taking into account the exchange of forces at the supports positioned at the ends of the vessel 2 as will be explained here below.

Inside an outer casing 3, hereinafter also referred to as outer vessel or third vessel, both the vessels 1 and 2 described previously are contained: in practice said third vessel 3 represents the casing that is around to, and appropriately spaced from, the two vessels 1 and 2, and maintains the relative positioning of said vessels 1, 2 in all conditions and situations of operation.

Said vessel 3 is of a cylindrical type (Fig. 1) with dome-shaped ends, suitable for being arranged horizontally and made of stainless steel or other material with low heat conductivity, for example the same material chosen to make the vessel 1.

The dimensioning criteria of this outer container 3 are:
- The weight of said vessel and accessories required for its assembly and use, such as the inner piping in the hollow space (not shown because always present in conventional tanks for connecting the helium tank and nitrogen tank to the outside environment during discharge/filling od said fluids) and optional external fixing structures, as specified here below;
- The weight of the two vessels 1 and 2, of the relative accessories already described previously and of the products contained in said vessels 1, 2, as well as the dynamic actions that are originated by these ones following to the handling;
- External atmospheric pressure.

This third vessel 3, if it is specifically used for transport, as well as for storage, will be contained in turn in a structure (not shown) allowing the stacking and handling thereof according to the transport modes of ISO containers, consequently being able to be homologated according to the standards in use.

Referring to the supporting system of the vessels 1 and 2 which support them with respect to the vessel 3, it will now be described in relation to what is illustrated in Figures 4-5.

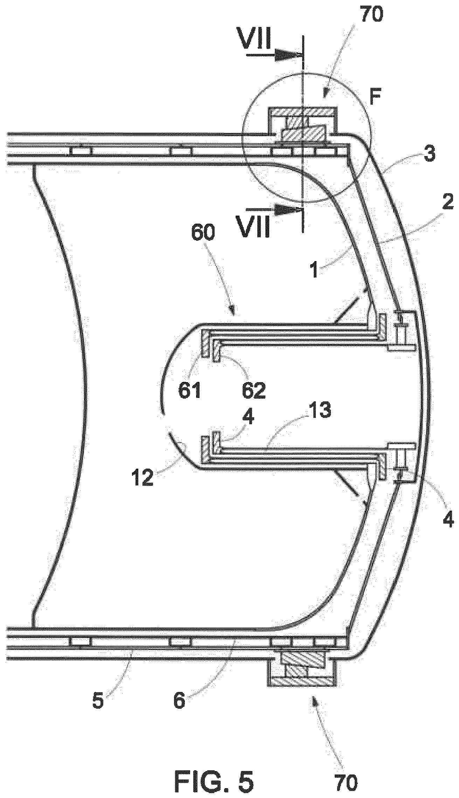

The supporting system adopted by the present container 100 is composed of:
- a first system 50 of horizontal supports arranged at the first domed head representing the distal end of the container 100 (Fig. 4);
- a second system 60 of horizontal supports, located at the second domed head representing the proximal end of the container 100 (Fig.5);
- a system 70 of vertical supports (Figs. 6-7).

The system of supports 50, 60 and 70, which is inside the container 100, consists of a fixed point support 50 and a sliding support 60 and 70, resulting therefore in a perfectly isostatic scheme (i.e. an isostatically constrained structure, statically determined system) that solves, in an alternative manner, the problem of differential expansions of the supports during use of the container.

In practice, said inner vessel 1 and said intermediate vessel 2 are fixed to the outer casing 3 by means of an isostatic system of supports 50, 60, 70 comprising a support 50 acting as fixed point and a plurality of mobile supports 60, 70 acting, thanks to the plays of assembly used, as hinged and sliding shoe (i.e. rocker support) able to allow the thermal expansions and contractions of the three above vessels without imposing any additional load.

Therefore, the kinematic scheme of the supports 50, 60, 70 can be traced back to a system constituted by
- a fixed point 50 (hinge) that absorbs the axial and shear actions without generating moments, and
- a proximal sliding support 60 associated with a shoe 70 (resulting in a hinged shoe system) which only absorb radial stresses generated by the weight of the components and product contained in the vessel 1 and vessel 2.

The support systems 50, 60 placed at the distal and proximal ends of the container 100, respectively, represent the only points of connection between vessel 1 and vessel 2.

Each system of horizontal supports 50, 60, which is inserted inside the respective cavity 12 formed on the vessel 1, comprises a plurality of concentric tubes, which are also designed to lengthen the thermal path to the extent necessary to contain the heat flow coming from the outside as will be explained here below in detail.

In particular, at the distal end of the container 100, the system of supports 50 provides a plurality (i.e. group or assembly) of coaxial concentric tubes 51, 52, 53 of different material and of different length, where each tube is suitably spaced from the other so as to form a respective chamber 11 which is closed only at one end while the other end of the chamber 11 is open and in fluid communication with the vessel 3 and/or with the vessel 2.

The group 51 of said concentric tubes, generally placed more externally to the system 50, is made with the same material as the inner casing 1, and the group 52 of said concentric tubes, generally the intermediate ones in the system 50, is made with the same material as the vessel 2, and the group 53 of said concentric tubes, generally those placed more internally to the system 50, is made in stainless steel.

The aperture of each chamber 11 is alternately turned towards the outside of the vessels 2 and 3 or towards the inside of the recess 12 of the vessel 1 so as to avoid any type of circulation, creating a thermal path with obstacles.

The closure of a chamber 11 can be accomplished by means of welding of a metal element 4 or in another way known in the art without thereby departing from the scope of the present invention.

In a preferred embodiment, the support system 50 is comprised of two concentric tubes 53, a concentric tube 52 which is also provided with two sheets in the same material to create an additional obstacle, and of four tubes 51.

The innermost tubes of the inner tube group 53 is attached to the outer casing 3 by means of a truncated cone support 55, while the three tubes - adjacent yet each belonging to a different tube group 51, 52, 53, are joined one to the other, at one end, by means of mechanical coupling with screws, bolts or other fastening systems 54, so as to make the system of concentric tubes 50 as a single and fixed body.

Also at the other end (i.e. domed head) of the container 100, in proximal position, a plurality of concentric tubes 61, 62 of different length are provided, where each tube is suitably spaced from the other so as to form a respective chamber 13 which is closed at one end only, while the other end of the chamber 13 is open and in fluid communication with the vessel 2.

The opening of each chamber 13 is alternately turned towards the end of the vessel 2 or towards the interior of the respective recess 12 of the vessel 1 so as to avoid any kind of circulation, creating a thermal path with obstacles.

The closure of a chamber 13 can be accomplished by welding a metal element 4 or in another way in itself known without thereby departing from the scope of the present invention.

The concentric tubes of the assemblies 61 and 62 are made with the same material as the tank 1.

In a preferred embodiment, the support system 60 is comprised of two concentric tubes 61 and two concentric tubes 62, one of which is also provided with a sheet (not shown in the drawings) in the same material to create an additional obstacle.

The innermost tube of the inner tube assembly 62 is attached to the intermediate vessel 2, while the remaining tubes are joined one to the other at one end by means of respective metal elements for closure 4 of the chambers 13.

Since none of these concentric tubes of the system 60 is integral with the outer casing 3, the system of supports 60 is free to retract longitudinally as the temperature changes during filling with the cryogenic liquid and of the sacrificial fluid.

Therefore, said intermediate vessel 2 constitutes the only support element for maintaining the inner vessel 1 containing the valuable fluid in the design position while the outer casing 3 provides a direct support only to the intermediate vessel/shield 2 containing the sacrificial fluid, thanks to the vertical support system 70.

It should be noted that the system of supports 70 (Figs. 5-6) also acts as a recovery system for thermal contractions and play, which is not based on elastic elements such as springs, or the like, which have the disadvantage of being subject to fatigue, and therefore to break.

In particular, with reference to Figure 6, said system for recovery of the play 70 is constituted by a lower block 20 integral with the intermediate vessel 2, and by a second upper block 21 integral with the outer casing 3, where said blocks 20, 21 are in contact with each other in a sliding manner.

The lower block 20 and consequently the block 21 have an oblique resting surface whose inclination corresponds to the angle formed by the horizontal and vertical components of the thermal contraction to which the vessel 2 is subjected when, in use, there is a change from the ambient temperature to the cryogenic operating temperature.

Said angle is closely related to the thermal expansion characteristics of the material in which the vessel 2 is made.

Said lower block 20 and said upper block 21 are preferably made in epoxy resin, for example G10, characterised by very low heat conductivity.

It is understood that other resins or polymers with very low conductivity and similar to that of G10 may also be used without thereby departing from the scope of the present invention.

The construction of the present container 100 is then completed, according to the current rules of cryogenic constructions, by the installation of the insulation consisting of a series of reflective shields (not shown) suitably arranged on each of the two inner vessels 1 and 2 and designed to reflect the radiation coming from the environment.

The present combination of supports 50, 60 and 70 has several advantages, and namely:
- It constitutes a very robust system of supports, making it possible to withstand much higher external loads than what is made possible by the configurations known in the art.
- It reduces the number of components needed to make the container, given that the vessel 2 of the sacrificial fluid also acts as shield, and that the two vessels 1 and 2 are supported inside the outer casing 3 only at the two ends thereof.
- Both vessels 1 and 2 containing the cryogenic fluids are held in their position inside the casing 3 by a system of supports 50, 60 and 70 having a strictly isostatic configuration (i.e. isostatically constrained structure), making the container 100 almost insensitive to stresses of thermal origin. The system of supports 50, 60 and 70 is in fact made in such a way as to prevent thermal contractions arising as a result of extreme temperature differences exceeding 300°K between the hottest component (vacuum outer casing 3) and the coldest one consisting of the innermost vessel 1 containing the fluid at a lower temperature.
- The support system of the vessel 2 containing the sacrificial fluid also allows the complete closing of the heat shield around the innermost vessel 1. Given the choice of materials characterised by high heat conductivity values, there is no longer the need to have a system of pipes assigned to maintain the uniformity of temperature in the shield, further simplifying the construction of the container.

In addition to being extremely simple from the point of view of realisation, the system of supports and play recovery 50, 60 and 70 allows the stresses to be absorbed that arise from handling and transport, even by rail, without undergoing damage, thus making the present container 100 extremely suitable for the transport of liquid helium by rail, transport to date not possible.

The present invention is not limited to the particular embodiments previously described and illustrated in the accompanying drawings but may be subject to numerous detailed changes within the reach of the person skilled in the art without thereby departing from the scope of the invention as defined in the appended claims.

## Claims

1. Tank (100) for storage, transport and distribution of a liquid or liquefied gas (L), in particular helium, particularly suitable for storage and rail transport, also in the form of ISO container, said tank (100) comprising
a first inner vessel (1) for containing said liquid or liquefied gas (L) to be stored, transported, distributed, said first inner vessel (1) being provided with a lateral cylindrical surface
a second intermediate vessel (2) placed outside and around said inner vessel (1), extending along the entire length of the inner vessel (1) and covering it having no points of contact with the lateral cylindrical surface of said inner vessel (1);
said second intermediate vessel (2) being provided with a lateral cylindrical surface
both of said inner and intermediate vessels (1,2) being contained in a third outer vessel or casing (3),
said three vessels (1,2,3) are concentric and coaxial one with the other, without close contact between them,
said intermediate vessel (2), made of a material having high thermal conductivity values, also comprises a cylindrical sheet (5) placed externally around the lateral cylindrical surface of said intermediate vessel (2) and suitably spaced from it the shell of said intermediate vessel (2), so as to create an annular chamber (6) which is closed at the both ends of said lateral surface of said intermediate vessel (2)
said closed annular chamber (6) containing, in use, a second cryogenic liquid having a boiling temperature, at atmospheric pressure, greater than the liquid or liquefied gas (L) contained in said inner vessel (1), preferably liquid nitrogen, so as to shield said inner vessel (1) from the thermal energy entering from the outside,
said tank (100) being also provided, in its interior, with an isostatic system of supports (50,60,70) to support said inner (1) and intermediate (2) vessels with respect to the outer casing (3) in such a way as to attach said inner and intermediate vessels (1,2) to said outer casing (3) at their ends,
said tank (100) being **characterised in that**
said isostatic system of supports comprising a fixed point support (50) and a support with two degrees of freedom acting as hinged and sliding shoe such as a rocker support,
said hinged shoes comprising a system of horizontal supports (60) and a system of vertical supports (70),
wherein the fixed point support (50) and the horizontal support system (60) are placed at the distal and proximal ends of said container (100), respectively, and they represent the only points of connection between said inner vessel (1) and said intermediate vessel (2),
each of said fixed point support and horizontal support system (50;60) being a horizontal support which is inserted inside a respective cavity (12) formed on said inner vessel (1) and each of said fixed point support and horizontal support system (50;60) comprising a plurality of coaxial concentric tubes of different length,
each tube of said plurality of tubes of the fixed point support and horizontal support system (50;60) is appropriately spaced from the other so as to form a respective chamber (11;13) which is closed only at one of its ends while the other end of the chamber (11; 13) is open and in fluid communication with the third outer vessel or casing (3) and/or with the intermediate vessel (2) so as to lengthen the thermal path of a thermal flow coming from the outside,
said fixed point support and horizontal support system being (50;60) accommodated in said respective cavity (12) performing also a shielding of the radiation.

2. Tank (100) according to claim 1, wherein the fixed point support (50) is a system of horizontal supports, attached to the casing (3) at one of its ends comprising a plurality of concentric and coaxial horizontal tubes (51,52,53), housed inside a recess (12) formed at one of the ends of the vessel (1), where each tube (51,52,53) of said fixed point support (50) is appropriately spaced from the other so as to form a respective chamber (11) which is closed only at one of its ends while the other end of the chamber (11) is open and in fluid communication with the casing (3) and/or with the intermediate vessel (2) so as to lengthen the thermal path of a thermal flow coming from the outside.

3. Tank (100) according to any one of the preceding claims, wherein
said horizontal support system (60) and said shoe system form a system suitable to absorb only the shear stresses generated by the weight of the components and of liquids contained in the inner and intermediate vessels (1,2).

4. Tank (100) according to claim 3, wherein said system of horizontal supports (60) is attached to the intermediate vessel (2) and is formed by a plurality of concentric coaxial horizontal tubes (61, 62), where each tube is suitably spaced from the other so as to form a respective chamber (13) which is closed at one of its ends while the other end of the chamber (13) is open and in fluid communication with the intermediate vessel (2).

5. Tank (100) according to any one of the preceding claims, wherein the vertical supports system (70) comprises
a pair of lower blocks (20) integral with the intermediate vessel (2),
a pair of upper blocks (21) integral with the external casing (3), said blocks (20,21) being in contact with each other in a sliding manner.

6. Tank (100) according to claim 5, wherein said lower blocks (20) and said upper blocks (21) are in contact along an oblique plane, the inclination thereof being equal to the angle originated by the horizontal and vertical components of the thermal contraction to which the vessel (2) is subject.

7. Tank (100) according to claim 5 or 6, wherein said blocks (20,21) are made of resin having very low heat conductivity.

## Patentansprüche

1. Tank (100) für Lagerung, Transport und Verteilung von einem flüssigen oder verflüssigten Gas(L), insbesondere Helium, der besonders für Lagerung und Schienentransport geeignet ist, auch in der Form eines ISO-Behälters, wobei der Tank (100) Folgendes umfasst:
einen ersten Innenbehälter (1) zur Aufnahme des flüssigen oder verflüssigten Gases (L), das gespeichert, transportiert, verteilt werden soll, wobei der erste Innenbehälter (1) mit einer seitlichen zylindrischen Oberfläche versehen ist
einen zweiten Zwischenbehälter (2), der außerhalb und um den Innenbehälter (1) herum platziert ist und sich entlang der Gesamtlänge des Innenbehälters (1) erstreckt, ihn abdeckt und keine Kontaktstellen mit der seitlichen zylindrischen Oberfläche des Innenbehälters (1) aufweist;
wobei der zweite Zwischenbehälter (2) mit einer seitlichen zylindrischen Oberfläche versehen ist beide, der Innen- und der Zwischenbehälter (1, 2) in einem dritten Außenbehälter oder Mantel (3) enthalten sind,
die drei Behälter (1, 2, 3) ohne engen Kontakt zwischen ihnen zueinander konzentrisch und koaxial sind,
wobei der Zwischenbehälter (2), der aus einem Material hergestellt ist, das hohe Wärmeleitfähigkeitswerte aufweist, ebenfalls ein zylindrisches Blech (5) umfasst, das außen um die seitliche, zylindrische Oberfläche des Zwischenbehälters (2) herum platziert ist und zweckmäßig so zur Ummantelung des Zwischenbehälters (2) beabstandet ist, dass es eine ringförmige Kammer (6) bildet, die an den beiden Enden der seitlichen Oberfläche des Zwischenbehälters (2) geschlossen ist
wobei die geschlossene, ringförmige Kammer (6) im Einsatz eine zweite kryogene Flüssigkeit mit einer Siedetemperatur bei atmosphärischem Druck aufweist, die höher ist als die des flüssigen oder verflüssigten Gases (L), das im Innenbehälter (1) enthalten ist, vorzugsweise Flüssigstickstoff, um das Innengefäß (1) gegen die von außen eindringende Wärmeenergie zu schützen,
wobei der Tank (100) ebenfalls in seinem Inneren mit einem isostatischen System von Stützen (50, 60, 70) versehen ist, um den Innenbehälter (1) und Zwischenbehälter (2) in Bezug auf den Außenmantel (3) dadurch zu stützen, dass der Innenbehälter und Zwischenbehälter (1, 2) am Außenmantel (3) an ihren Enden befestigt sind,
wobei der Tank (100) **dadurch gekennzeichnet ist, dass** das isostatische System von Stützen eine Festpunktstütze (50) und eine Stütze mit zwei Freiheitsgraden umfasst, die als Gelenk- und Gleitschuh wie zum Beispiel eine Schwingstütze fungieren,
wobei Gelenkschuhe ein System von horizontalen Stützen (60) und ein System von vertikalen Stützen (70) umfassen,
wobei das Festpunktstützen- (50) und das horizontale Stützensystem (60) jeweils am distalen und proximalen Ende des Tanks (100) platziert sind und sie die einzigen Verbindungsstellen zwischen dem Innenbehälter (1) und dem Zwischenbehälter (2) darstellen,
wobei jedes von Festpunktstützen- und horizontalem Stützensystem (50; 60) eine horizontale Stütze ist, die im Inneren eines jeweiligen Hohlraums (12) eingesetzt ist, der am Innenbehälter (1) ausgebildet ist, und jedes von Festpunktstützen- und horizontalem Stützensystem (50; 60) eine Vielzahl von koaxialen konzentrischen Röhren von verschiedener Länge umfasst,
und jede Röhre der Vielzahl von Röhren des Festpunktstützen- und horizontalen Stützensystems (50; 60)zweckmäßig zur anderen beabstandet ist, um eine jeweilige Kammer (11; 13) zu bilden, die nur an einem ihrer Enden geschlossen ist, während das andere Ende der Kammer (11; 13) offen ist und in strömungstechnischer Verbindung mit dem dritten Außenbehälter oder Mantel (3) und/oder mit dem Zwischenbehälter (2) steht, um den thermischen Pfad eines Wärmestroms zu verlängern, der von außen kommt,
wobei das Festpunktstützen- und das horizontale Stützensystem (50; 60) in dem jeweiligen Hohlraum (12) untergebracht sind, der ebenfalls eine Abschirmung der Strahlung durchführt.

2. Tank (100) nach Anspruch 1, wobei die Festpunktstütze (50) ein System von horizontalen Stützen ist, die am Mantel (3) an einem seiner Enden befestigt sind, umfassend eine Vielzahl von konzentrischen und koaxialen Röhren (51, 52, 53), die innerhalb einer Vertiefung (12) untergebracht sind, die an einem der Enden des Behälters (1) ausgebildet ist, wobei jede Röhre (51,52,53) der Festpunktstütze (50) zweckmäßig zur anderen beabstandet ist, um eine jeweilige Kammer (11) zu bilden, die nur an einem ihrer Enden geschlossen ist, während das andere Ende der Kammer (11) offen ist und in strömungstechnischer Verbindung zum Mantel (3) und/oder zum Zwischenbehälter (2) steht, um den thermischen Pfad eines von außen kommenden Wärmestrom zu verlängern.

3. Tank (100) nach einem der vorstehenden Ansprüche, wobei das horizontale Stützensystem (60) und das Schuhsystem ein System bilden, das geeignet ist, um nur die Scherspannungen zu absorbieren, die durch das Gewicht der Komponenten und Flüssigkeiten erzeugt werden, die im Innen- und Zwischenbehälter (1, 2) enthalten sind.

4. Tank (100) nach Anspruch 3, wobei das System von horizontalen Stützen (60) am Zwischenbehälter (2) befestigt ist und von einer Vielzahl von konzentrischen, koaxialen horizontalen Röhren (61, 62) gebildet wird, wobei jede Röhre zweckmäßig zur anderen beabstandet ist, um eine jeweilige Kammer (13) zu bilden, die an einem ihrer Enden geschlossen ist, während das andere Ende der Kammer (13) offen ist und in strömungstechnischer Verbindung mit dem Zwischenbehälter (2) steht.

5. Tank (100) nach einem der vorstehenden Ansprüche, wobei das vertikale Stützensytem (70) Folgendes umfasst:
ein Paar unterer Blöcke (20), die im Zwischenbehälter (2) integriert sind,
ein Paar oberer Blöcke (21), die im Außenmantel (3) integriert sind, wobei die Blöcke (20, 21) auf gleitende Weise in Kontakt zueinander stehen.

6. Tank (100) nach Anspruch 5, wobei die unteren Blöcke (20) und die oberen Blöcke (21) entlang einer schrägen Ebene in Kontakt stehen, deren Neigung gleich dem Winkel ist, der von den horizontalen und vertikalen Komponenten der Wärmekontraktion erzeugt wird, welcher der Behälter (2) ausgesetzt ist.

7. Tank (100) nach Anspruch 5 oder 6, wobei die Blöcke (20, 21) aus Harz hergestellt sind, der sehr niedrige Wärmeleitfähigkeit aufweist.

## Revendications

1. Récipient (100) destiné au stockage, au transport et à la distribution d'un gaz liquide ou liquéfié (L), en particulier de l'hélium, particulièrement adapté pour le stockage et le transport ferroviaire, également sous la forme d'un contenant ISO, ledit récipient (100) comprenant
une première cuve interne (1) destinée à contenir ledit liquide ou gaz liquéfié (L) à stocker, transporter, distribuer, ladite première cuve interne (1) étant pourvue d'une surface cylindrique latérale,
une deuxième cuve intermédiaire (2) placée à l'extérieur et autour de ladite cuve interne (1), s'étendant sur toute la longueur de la cuve interne (1) et la recouvrant sans avoir de point de de contact avec la surface cylindrique latérale de ladite cuve interne (1) ;
ladite deuxième cuve intermédiaire (2) étant pourvue d'une surface cylindrique latérale, lesdites cuves interne et intermédiaire (1, 2) étant toutes deux contenues dans une troisième cuve ou enceinte extérieure (3),
lesdites trois cuves (1, 2, 3) étant concentriques et coaxiales les unes par rapport aux autres sans contact étroit entre elles,
ladite cuve intermédiaire (2), composée d'un matériau ayant des valeurs de conductivité thermique élevées, comprenant également une feuille cylindrique (5) placée à l'extérieur autour de la surface cylindrique latérale de ladite cuve intermédiaire (2) et espacée de manière adéquate de la coque de ladite cuve intermédiaire (2) afin de créer une chambre annulaire (6) qui est fermée aux deux extrémités de ladite surface latérale de ladite cuve intermédiaire (2),
ladite chambre annulaire fermée (6) contenant, à l'usage, un second liquide cryogénique ayant une température d'ébullition, à la pression atmosphérique, supérieure à celle du liquide ou du gaz liquéfié (L) contenu dans ladite cuve interne (1), de préférence de l'azote liquide, de manière à protéger ladite cuve interne (1) de l'énergie thermique entrant depuis l'extérieur,
ledit réservoir (100) étant aussi pourvu, dans son intérieur, d'un système isostatique de supports (50, 60, 70) afin de supporter lesdites cuves interne (1) et intermédiaire (2) par rapport à l'enceinte extérieure (3) de manière à rattacher lesdites cuves interne et intermédiaire (1, 2) à ladite enceinte extérieure (3) par leurs extrémités,
ledit réservoir (100) étant **caractérisé en ce que** ledit système isostatique de support comprend un point support fixe (50) et un support avec deux degrés de liberté faisant office de patin articulé et coulissant, comme un support basculant,
lesdits patins articulés comprenant un système de supports horizontaux (60) et un système de support vertical (70),
le support à point fixe (50) et le système de supports horizontaux (60) étant placés aux extrémités distales et proximales dudit récipient (100) respectivement et représentant les seuls points de connexion entre ladite cuve interne (1) et ladite cuve intermédiaire (2),
chacun desdits support à point fixe et système de supports horizontaux (50 ; 60) étant un support horizontal qui est inséré dans une cavité respective (12) pratiquée sur ladite cuve interne (1) et chacun desdits support à point fixe et système de supports horizontaux (50 ; 60) comprenant une pluralité de tubes concentriques coaxiaux de longueur différente,
chaque tube de ladite pluralité de tubes du support à point fixe et système de supports horizontaux (50 ; 60) étant espacé de manière appropriée des autres de manière à former une chambre respective (11 ; 13) qui est fermée seulement à une de ses extrémités alors que l'autre extrémité de la chambre (11 ; 13) est ouverte et en communication fluidique avec la troisième enceinte ou cuve extérieure (3) et/ou avec la cuve intermédiaire (2) de manière à allonger le parcours thermique d'un flux thermique venant de l'extérieur,
lesdits support à point fixe et système de supports horizontaux (50 ; 60) étant logés dans ladite cavité respective (12) en créant également un blindage contre les radiations.

2. Récipient (100) selon la revendication 1, dans lequel le support à point fixe (50) est un système de supports horizontaux, rattaché à l'enceinte (3) à l'une de ses extrémités et comprenant une pluralité de tubes concentriques et coaxiaux (51, 52, 53) logés dans un retrait (12) pratiqué à une des extrémités de la cuve (1), chaque tube (51, 52, 53) dudit support à point fixe (50) étant espacé de manière appropriée des autres de manière à former une chambre respective (11) qui est fermée seulement à une de ses extrémités alors que l'autre extrémité de la chambre (11) est ouverte et en communication fluidique avec l'enceinte (3) et/ou avec la cuve intermédiaire (2) de manière à allonger le parcours thermique d'un flux thermique venant de l'extérieur.

3. Récipient (100) selon l'une quelconque des revendications précédentes, dans lequel ledit système de supports horizontaux (60) et ledit système de patin forme un système apte à absorber seulement les contraintes de cisaillement générées par le poids des composants et des liquides contenus dans les cuves interne et intermédiaire (1,2).

4. Récipient (100) selon la revendication 1, dans lequel ledit système de supports horizontaux (60) est rattaché à la cuve intermédiaire (2) et est formé d'une pluralité de tubes horizontaux coaxiaux concentriques (61, 62), chaque tube étant espacé de manière appropriée des autres de manière à former une chambre respective (13) qui est fermée à une de ses extrémités alors que l'autre extrémité de la chambre (13) est ouverte et en communication fluidique avec la cuve intermédiaire (2).

5. Récipient (100) selon l'une quelconque des revendications précédentes, dans lequel le système de supports verticaux (70) comprend
une paire de blocs inférieurs (20) faisant partie intégrante de la cuve intermédiaire (2),
une paire de blocs supérieurs (21) faisant partie intégrante de l'enceinte externe (3), lesdits blocs (20, 21) étant en contact les uns avec les autres de manière coulissante.

6. Récipient (100) selon la revendication 5, dans lequel lesdits blocs inférieurs (20) et lesdits blocs supérieurs (21) sont en contact le long d'un plan oblique, son inclinaison étant égale à l'angle dû aux composants horizontaux et verticaux de la contraction thermique à laquelle la cuve (2) est soumise.

7. Récipient (100) selon la revendication 5 ou 6, dans lequel lesdits blocs (20, 21) sont composés de résine ayant une très faible conductivité thermique.
